# EUROPÄISCHE PATENTANMELDUNG

(11) **EP 4 385 698 A1**
(43) Veröffentlichungstag der Anmeldung: **19.06.2024**
(21) Anmeldenummer: 23212169.9
(22) Anmeldetag: 27.11.2023
(51) Int. Cl.: B29B 7/18, B29B 7/26, B29B 7/80

(54) **INNENMISCHER MIT SCHUTZ VOR RÜCKSTÄNDEN EINES MISCHGUTES**

(30) Priorität: 13.12.2022 DE 102022213500
(71) Anmelder: Continental Reifen Deutschland GmbH, 30175 Hannover (DE)
(72) Erfinder: Kuck, Detlef, 30165 Hannover (DE); Wendzik, Jürgen, 30165 Hannover (DE)
(74) Vertreter: Continental Corporation

(57) **Zusammenfassung**

Ein Innenmischer (1) mit Schutz vor Rückständen eines Mischgutes umfasst eine Mischkammer (10) zum Mischen des Mischgutes, wobei die Mischkammer (10) eine Entleerungsöffnung (11) zum Entleeren des Mischgutes aus der Mischkammer (10) aufweist. Der Innenmischer (1) umfasst weiterhin einen beweglichen Klappsattel (20) zum Verschließen und Öffnen der Entleerungsöffnung (11) und eine Befeuchtungseinrichtung (30), die zum Befeuchten des Klappsattels (20) ausgebildet ist.

## Beschreibung

Die Erfindung betrifft einen Innenmischer zur Herstellung eines Mischgutes, beispielsweise einer Kautschukmischung, mit Schutz vor Rückständen des Mischgutes an dem Innenmischer, insbesondere an einem Klappsattel des Innenmischers.

Ein Innenmischer wird zur Verarbeitung plastischer Massen, beispielsweise zur Verarbeitung von Kautschuk, eingesetzt. Die plastischen Massen werden dazu in eine Mischkammer des Innenmischers eingeführt. Die Mischung der plastischen Massen zur Herstellung eines Mischgutes findet innerhalb der Mischkammer statt, indem ein Stempel die Einzelkomponenten der Mischung zwischen gegenläufige Rotoren drückt. Dadurch werden die Komponenten der Mischung durchmischt und durchknetet. Nach Ende des Mischprozesses wird das Mischgut durch eine Entleerungsöffnung am Boden der Mischkammer zur Weiterverarbeitung aus der Mischkammer ausgetragen.

Die Entleerungsöffnung ist während der Vermischung der Einzelkomponenten von einem Klappsattel verschlossen. Dazu wird der Klappsattel durch einen Riegel/Kniehebel in der geschlossenen Position verriegelt. Zum Entleeren der Mischkammer öffnet sich der Klappsattel, so dass das Mischgut aus der Mischkammer entnommen werden kann. Der Klappsattel umfasst ein Satteldach, das die Entleerungsöffnung verschließt. Das Satteldach ist auf einem Sattelträger befestigt. Der Sattelträger ist an einer Drehachse drehbar gelagert. Zum Öffnen der Entleerungsöffnung wird der Riegel/Kniehebel abgeklappt, wodurch der Sattelträger durch einen Schwenkantrieb um 180° um die Drehachse gedreht werden kann. Das Mischgut fällt danach durch die geöffnete Entleerungsöffnung aus der Mischkammer heraus.

Bei einigen besonders klebrigen Mischungen kommt es beim Austragen des Mischgutes aus der Mischkammer zu Anhaftungen von Mischungsteilen im Öffnungsbereich des Klappsattels, speziell im Bereich der Drehachse des Klappsattels. Diese Anhaftungen verhindern oftmals ein vollständiges Schließen und Verriegeln des Klappsattels. Die Folge ist ein Stillstand des Innenmischers, bis die an dem Sattelträger haftenden Rückstände manuell entfernt worden sind und die Entleerungsöffnung für einen neuen Mischprozess wieder geschlossen werden kann.

Ein Anliegen der vorliegenden Erfindung ist es, einen Innenmischer mit Schutz vor Rückständen eines Mischgutes anzugeben, bei dem das Anhaften von Mischungsresten an einem Klappsattel des Innenmischers wirkungsvoll verhindern werden kann.

Eine Ausführungsform eines derartigen Innenmischers mit Schutz vor Rückständen eines Mischgutes ist im Patentanspruch 1 angegeben.

Der Innenmischer umfasst eine Mischkammer zum Mischen des Mischgutes. Die Mischkammer weist eine Entleerungsöffnung zum Entleeren des Mischgutes auf. Des Weiteren umfasst der Innenmischer einen beweglichen Klappsattel zum Verschließen und Öffnen der Entleerungsöffnung der Mischkammer. Erfindungsgemäß umfasst der Innenmischer eine Befeuchtungseinrichtung, die zum Befeuchten des Klappsattels ausgebildet ist.

In Versuchen hat sich gezeigt, dass selbst klebrigste Mischungen, die in einem Innenmischer vermischt werden, nicht an feuchten Oberflächen, insbesondere heißen und feuchten Oberflächen, haften. Daher wird vorgeschlagen, bei einem Innenmischer eine Befeuchtungseinrichtung vorzusehen, die den Klappsattel zumindest beim Öffnen der Entleerungsöffnung befeuchtet. Als Befeuchtungssubstanz kann ein (heißer) Dampf oder ein (kalter) Sprühnebel verwendet werden, der sich auf der Oberfläche des Klappsattels niederschlägt. Der Dampf oder Sprühnebel kann aus einem Gemisch aus Wasser und Luft gebildet sein.

Gemäß einer möglichen Ausführungsform des Innenmischers ist der Klappsattel um eine Drehachse drehbar gelagert. Dadurch kann der Klappsattel von einer Schließposition, in der die Entleerungsöffnung der Mischkammer von dem Klappsattel verschlossen ist, in eine Öffnungsposition, in der die Entleerungsöffnung zum Entleeren des Mischgutes aus der Mischkammer geöffnet ist, verschwenkt werden. Erfindungsgemäß ist die Befeuchtungseinrichtung insbesondere dazu ausgebildet, den Klappsattel im Bereich der Drehachse zu befeuchten.

Gemäß einer möglichen Ausführungsform des Innenmischers weist der Klappsattel einen Sattelträger und ein Satteldach auf, das an dem Sattelträger befestigt ist. Um ein Anhaften von Mischungsresten an dem Klappsattel beim Entleeren des Mischgutes aus der Mischkammer zu verhindern, kann der Sattelträger insbesondere im Bereich der Drehachse mit der Befeuchtungssubstanz befeuchtet werden. Der Sattelträger kann im Bereich seiner Drehachse zum Beispiel einem Dampfstrom ausgesetzt werden, der den Sattelträger beheizt und befeuchtet, oder durch einen Sprühnebel benetzt werden.

Gemäß einer möglichen Ausführungsform umfasst die Befeuchtungseinrichtung mindestens ein Rohr mit einer Austrittsöffnung, an der eine Düse vorgesehen sein kann. Durch das mindestens eine Rohr wird die Befeuchtungssubstanz, beispielsweise der Dampf oder Sprühnebel, zu dem Bereich der Drehachse des Klappsattels beziehungsweise des Sattelträgers geleitet. Dazu kann das mindestens eine Rohr mit einem kleinen Durchmesser in einem Bereich zwischen der Mischkammer und der Drehachse befestigt werden. Das Rohrende beziehungsweise die Düse an der Austrittsöffnung des mindestens einen Rohres zeigt dabei in Richtung des Sattelträgers.

Durch das mindestens eine Rohr wird die Befeuchtungssubstanz auf den Sattelträger geblasen. Die Befeuchtungssubstanz schlägt sich als Wasserfilm an dem Klappsattel nieder. Der Dampf erhitzt beispielsweise den Sattelträger im Bereich der Drehachse, kondensiert und schlägt sich als Wasserfilm auf der Oberfläche des Sattelträgers nieder. Alternativ kann der Wasserfilm durch den Sprühnebel gebildet werden, der sich ebenfalls auf der Oberfläche des Sattelträgers niederschlagen kann. Durch den dünnen Wasserfilm kann das Anhaften von Rückständen des Mischgutes am Klappsattel und insbesondere an dem Sattelträger des Klappsattels im Bereich der Drehachse des Sattelträgers verhindert werden.

Ausführungsformen der Erfindung werden im Folgenden anhand einer Figur anschaulich erläutert.

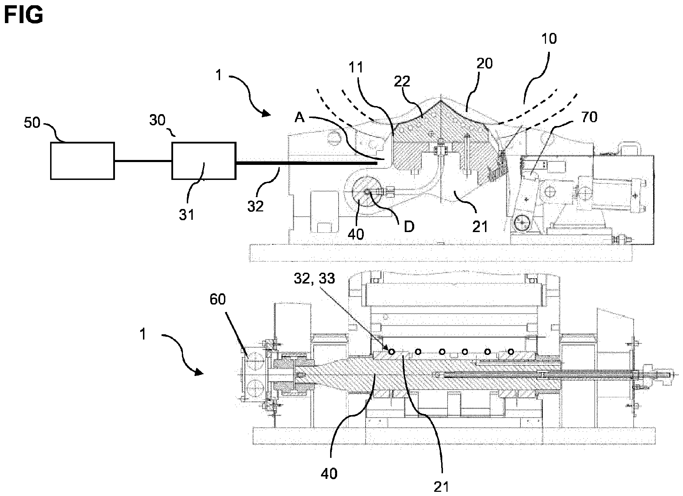

Die Figur zeigt in der oberen Skizze eine Queransicht auf einen unteren Bereich eines Innenmischers unterhalb einer Mischkammer. Die untere Skizze der Figur zeigt einen Querschnitt durch den unteren Bereich des Innenmischers entlang einer Welle, die die Drehachse des Klappsattels bildet.

Der in der Figur gezeigte erfindungsgemäße Innenmischer 1 mit Schutz vor Rückständen eines Mischgutes umfasst eine Mischkammer 10 zum Mischen des Mischgutes, die in der Figur strichliert angedeutet ist. Die Mischkammer 10 weist an ihrem unteren Ende eine Entleerungsöffnung 11 zum Entleeren des Mischgutes aus der Mischkammer 10 auf. Zum Verschließen und Öffnen der Entleerungsöffnung 11 weist der Innenmischer 1 einen beweglichen Klappsattel 20 auf. Des Weiteren umfasst der Innenmischer 1 eine Befeuchtungseinrichtung 30 zum Befeuchten des Klappsattels 20.

Die Befeuchtungseinrichtung 30 ist zum Bereitstellen einer Befeuchtungssubstanz ausgebildet. Die Befeuchtungssubstanz kann ein Dampf oder ein Sprühnebel sein. Der Dampf oder Sprühnebel kann beispielsweise aus einem Gemisch aus Wasser und Luft gebildet sein. Der Dampf kann aus einem heißen Gemisch aus Wasser und Luft gebildet sein. Der Sprühnebel kann ein kaltes Gemisch aus Wasser und Luft sein. Bei Verwendung eines Dampfs als Befeuchtungssubstanz kondensiert der heiße Dampf vorteilhaft an dem kälteren Material des Klappsattels 20 und schlägt sich als Wasserfilm auf der Oberfläche des Klappsattels nieder.

Für den Transport der Befeuchtungssubstanz, insbesondere des Dampfs oder Sprühnebels, umfasst die Befeuchtungseinrichtung 30 mindestens ein Rohr 32. Das mindestens eine Rohr weist eine Austrittsöffnung beziehungsweise Düse 33 zum Versprühen der Befeuchtungssubstanz an einem Ende des Rohres auf. Das mindestens eine Rohr 32 führt in einen Zwischenraum A zwischen der Mischkammer 10 und dem Klappsattel 20. Insbesondere sind die Austrittsöffnung beziehungsweise Düse 33 am Ende des mindestens einen Rohres in dem Zwischenraum A zwischen der Mischkammer 10 und dem Klappsattel 20 angeordnet, sodass die Befeuchtungssubstanz in Richtung des Klappsattels geblasen werden kann und den Klappsattel befeuchtet. Die Anzahl der Rohre 32 zum Transport der Befeuchtungssubstanz und die Anzahl der Düsen 33 kann je nach den Gegebenheiten, insbesondere in Abhängigkeit von den Dimensionen des Innenmischers, variabel gewählt sein.

Zur Bereitstellung der Befeuchtungssubstanz kann die Befeuchtungseinrichtung 30 einen Dampf- oder Sprühnebelerzeuger 31, an dem das mindestens eine Rohr 32 angeschlossen ist, aufweisen. In einigen Mischsälen wird Dampf als Löschmittel in der Absaugung eingesetzt. Alternativ zum Vorsehen eines Dampferzeugers kann Dampf als Befeuchtungssubstanz daher von einem Absaugsystem zur Verfügung gestellt werden. Das mindestens eine Rohr 32 kann an eine Dampfleitung des Absaugsystems, aus dem der Dampf zum Befeuchten des Klappsattels abgezapft wird, angeschlossen sein.

Der Klappsattel 20 ist um eine Drehachse D drehbar gelagert, sodass der Klappsattel 20 von einer Schließposition, in der die Entleerungsöffnung 11 der Mischkammer von dem Klappsattel 20 verschlossen ist, in eine Öffnungsposition, in der die Entleerungsöffnung 11 zum Entleeren des Mischgutes aus der Mischkammer 10 geöffnet ist, verschwenkbar ist. Gemäß einer bevorzugten Ausführungsform ist die Befeuchtungseinrichtung 30 insbesondere dazu ausgebildet, den Klappsattel 20 im Bereich der Drehachse D zu befeuchten.

Der Klappsattel 20 kann an einer Welle 40 drehbar gelagert sein, um den Klappsattel zwischen der Schließposition und der Öffnungsposition zu bewegen beziehungsweise zu verschwenken. Die Welle 40 kann dazu von einer Antriebseinheit 60 angetrieben werden. Gemäß einer möglichen Ausführungsform kann die Befeuchtungseinrichtung 30 zum Befeuchten von zumindest einem Teil der Welle 40 ausgebildet sein. Dadurch kann verhindert werden, dass Mischungsrückstände beim Entleeren der Mischkammer an der Welle 40 anhaften.

Der Klappsattel 20 weist einen Sattelträger 21 und ein Satteldach 22 auf, das an dem Sattelträger 21 befestigt ist. Der Sattelträger 21 ist an der Welle 40 drehbar gelagert. Die Befeuchtungseinrichtung 30 ist dazu ausgebildet, den Sattelträger 21 des Klappsattels 20 zu befeuchten. Insbesondere ist die Befeuchtungseinrichtung 30 dazu ausgebildet, den Sattelträger 21 im Bereich der Drehachse D zu befeuchten. Gemäß einer möglichen Ausführungsform kann die Befeuchtungseinrichtung 30 auch zum Befeuchten des Satteldachs 22 ausgebildet sein.

Zum Steuern der Befeuchtungseinrichtung 30 umfasst der Innenmischer 1 eine Steuereinrichtung 50. Die Steuereinrichtung 50 steuert die Befeuchtungseinrichtung 30 derart, dass die Befeuchtungssubstanz beim Öffnen des Klappsattels 20 versprüht wird. Dadurch kann sich die Befeuchtungssubstanz beim Öffnen des Klappsattels 20 an dem Klappsattel 20, insbesondere an dem Sattelträger 21 im Bereich der Drehachse D und je nach Ausführungsform an der Welle 40 und/oder dem Satteldach 22 des Klappsattels, niederschlagen.

Durch das Befeuchten des Sattelträgers 21 im Bereich der Drehachse D kann verhindert werden, dass sich Rückstände einer klebrigen Mischung des Mischgutes beim Entleeren der Mischkammer an dem Sattelträger 21 beziehungsweise der Welle 40 ablagern und an dem Sattelträger 21 beziehungsweise an der Welle 40 anhaften. Rückstände des Mischgutes, die ansonsten beim Entleeren der Mischkammer insbesondere im Bereich der Drehachse D an dem Sattelträger anhaften, können dazu führen, dass der Klappsattel 20 die Entleerungsöffnung 11 für einen neuen Mischvorgang nicht mehr richtig verschließt. Insbesondere kann es zu einer Verkantung des Klappsattels 20 in der Entleerungsöffnung 11 kommen, durch die eine Verriegelung des Klappsattels durch einen Verriegelungseinrichtung 70 unmöglich wird. Durch die erfindungsgemäße Ausstattung des Innenmischers mit einer Befeuchtungseinrichtung 30 kann somit ein Stillstand des Innenmischers infolge von klebenden Materialrückständen an dem Klappsattel verhindert werden.

Gemäß einer möglichen Ausführungsform des Innenmischers kann die Menge der Befeuchtungssubstanz während des Versprühens und/oder der Druck, mit dem die Befeuchtungssubstanz versprüht wird, und/oder die Dauer, während der die Befeuchtungssubstanz versprüht wird, und/oder der Zeitpunkt, zu dem die Befeuchtungssubstanz versprüht wird, variabel eingestellt werden. Dadurch kann die Menge an Dampf- oder Sprühnebel, der Druck des Dampfs- oder Sprühnebels, beziehungsweise die Dauer und der Zeitpunkt der Dampf- beziehungsweise Sprühnebelbeaufschlagung angepasst und optimiert werden.

### Bezugszeichenliste

- 1: Innenmischer
- 10: Mischkammer
- 11: Entleerungsöffnung
- 20: Klappsattel
- 21: Sattelträger
- 22: Satteldach
- 30: Befeuchtungseinrichtung
- 31: Dampf-/Sprühnebelerzeuger
- 32: Rohr
- 33: Austrittsöffnung, Düse
- 40: Welle
- 50: Steuereinrichtung
- 60: Antriebseinrichtung
- 70: Verriegelungseinrichtung

## Patentansprüche

1. Innenmischer mit Schutz vor Rückständen eines Mischgutes, umfassend:
- eine Mischkammer (10) zum Mischen des Mischgutes, wobei die Mischkammer (10) eine Entleerungsöffnung (11) zum Entleeren des Mischgutes aus der Mischkammer (10) aufweist,
- einen beweglichen Klappsattel (20) zum Verschließen und Öffnen der Entleerungsöffnung (11),
- eine Befeuchtungseinrichtung (30), die zum Befeuchten des Klappsattels (20) ausgebildet ist.

2. Innenmischer nach Anspruch 1,
- wobei der Klappsattel (20) um eine Drehachse (D) drehbar gelagert ist, so dass der Klappsattel (20) von einer Schließposition, in der die Entleerungsöffnung (11) von dem Klappsattel (20) verschlossen ist, in eine Öffnungsposition, in der die Entleerungsöffnung (11) zum Entleeren des Mischgutes aus der Mischkammer (10) geöffnet ist, verschwenkbar ist,
- wobei die Befeuchtungseinrichtung (30) dazu ausgebildet ist, den Klappsattel (20) im Bereich der Drehachse (D) zu befeuchten.

3. Innenmischer nach Anspruch 1 oder 2,
- wobei der Klappsattel (20) einen Sattelträger (21) aufweist,
- wobei die Befeuchtungseinrichtung (30) zum Befeuchten des Sattelträgers (21) ausgebildet ist.

4. Innenmischer nach einem der Ansprüche 1 bis 3,
- wobei der Klappsattel (20) ein Satteldach (22) aufweist,
- wobei die Befeuchtungseinrichtung (30) zum Befeuchten des Satteldachs (22) ausgebildet ist.

5. Innenmischer nach einem der Ansprüche 1 bis 4 ,
- wobei der Klappsattel (20) an einer Welle (40) drehbar gelagert ist,
- wobei die Befeuchtungseinrichtung (30) zum Befeuchten von zumindest einem Teil der Welle (40) ausgebildet ist.

6. Innenmischer nach einem der Ansprüche 1 bis 5,
- wobei die Befeuchtungseinrichtung (30) zum Bereitstellen einer Befeuchtungssubstanz ausgebildet ist,
- wobei die Befeuchtungssubstanz ein Dampf oder ein Sprühnebel ist.

7. Innenmischer nach Anspruch 6,
wobei der Dampf oder der Sprühnebel aus einem Gemisch aus Wasser und Luft gebildet ist.

8. Innenmischer nach einem der Ansprüche 1 bis 7,
- wobei die Befeuchtungseinrichtung (30) mindestens ein Rohr (32) mit einer Düse (33) aufweist,
- wobei die Düse (33) in einen Zwischenraum zwischen der Mischkammer (10) und dem Klappsattel (20) angeordnet ist.

9. Innenmischer nach einem der Ansprüche 6 bis 8, umfassend:
- eine Steuereinrichtung (50) zum Steuern der Befeuchtungseinrichtung (30),
- wobei die Steuereinrichtung (50) die Befeuchtungseinrichtung (30) derart steuert, dass die Befeuchtungssubstanz beim Öffnen des Klappsattels (20) versprüht wird.

10. Innenmischer nach einem der Ansprüche 6 bis 9,
wobei die Menge der Befeuchtungssubstanz während des Versprühens und/oder der Druck, mit dem die Befeuchtungssubstanz versprüht wird, und/oder die Dauer, während der die Befeuchtungssubstanz versprüht wird, und/oder der Zeitpunkt, zu dem die Befeuchtungssubstanz versprüht wird, variabel einstellbar sind.
